# EUROPÄISCHE PATENTANMELDUNG

(11) **EP 2 608 494 A2**
(43) Veröffentlichungstag der Anmeldung: **26.06.2013**
(21) Anmeldenummer: 12198543.6
(22) Anmeldetag: 20.12.2012
(51) Int. Cl.: H04M 1/2745, H04M 1/725, G06F 3/01

(54) **Verfahren zum Betreiben eines elektronischen Endgeräts**

(30) Priorität: 21.12.2011 DE 102011121969
(71) Anmelder: Deutsche Telekom AG, 53113 Bonn (DE)
(72) Erfinder: Steinkuhle, Axel, 50733 Köln (DE)
(74) Vertreter: Braun-Dullaeus, Karl-Ulrich

(57) **Zusammenfassung**

Verfahren zum Betreiben eines elektronischen Endgerätes, insbesondere eines Mobiltelefons oder eines PCs, umfassend die folgenden Verfahrensschritte:
Bereitstellen von zumindest zwei unterschiedlichen Kommunikationsanwendungen, insbesondere einer Emailanwendung, einer SMS-Anwendung oder einer Telefonanwendung,
wobei die Kommunikationsanwendungen anhand von Kommunikationszieldaten, insbesondere einer Telefonnummer oder einer Emailadresse, eine elektronische Kommunikationsverbindung mit einem Kommunikationsziel, insbesondere einem Gesprächsteilnehmer oder einem dem Gesprächsteilnehmer zugeordneten Endgerät, aufbauen können,
gekennzeichnet durch folgende Verfahrensschritte:
Ablegen einer Referenz auf ein Kommunikationsziel in einer Kontakteliste durch die erste Kommunikationsanwendung, falls eine Kommunikationsverbindung durch die erste Kommunikationsanwendung mit diesem Kommunikationsziel aufgebaut wird oder ein Kommunikationsversuch mit diesem Kommunikationsziel durch die erste Kommunikationsanwendung erfolgt,
Abfragen der Kontakteliste durch die zweite Kommunikationsanwendung, wenn ein Kommunikationsaufbau mit dieser zweiten Kommunikationsanwendung eingeleitet wird,
Bereitstellen von Kommunikationszieldaten des zuletzt verwendeten oder mehrerer der zuletzt verwendeten Kommunikationsziele, welche der zweiten Kommunikationsanwendung entsprechen, für eine Auswahl durch den Nutzer zum Zwecke des Aufbaus einer Kommunikationsverbindung durch die zweite Kommunikationsanwendung.

## Beschreibung

Die Erfindung betrifft ein Verfahren zum Betreiber eines elektronischen Endgeräts.

Über elektronische Endgeräte, insbesondere mobile elektronische Endgeräte, wie beispielsweise Mobiltelefone, kann zwischen zwei Personen, nämlich den Nutzern solcher Endgeräte, eine elektronische Kommunikationsverbindung aufgebaut werden. Tatsächlich wird eine elektronische Verbindung lediglich zwischen den Endgeräten aufgebaut, zu denen die jeweiligen Nutzer Zugriff haben, also die den jeweiligen Nutzern zugeordnet sind.

Üblicherweise erfolgt der Aufbau einer Kommunikation durch Wählen einer Telefonnummer oder durch Aufrufen eines Eintrags in einer Kontaktliste, wobei durch den Aufruf des Kontaktlisteneintrages auch direkt die Telefonnummer des Kontakts ausgewählt werden kann. Bei Telefonanwendungen wird dem Nutzer zumeist eine Anrufliste über tatsächlich zustande gekommene oder zumindest versuchte Telefonverbindungen angeboten. Aus dieser Liste sind die entsprechenden Kommunikationsziele, beispielsweise der gewünschte Gesprächspartner, ersichtlich.

Zeitgemäße elektronische Endgeräte verfügen aber neben einer Telefonfunktion über die Möglichkeit, Kommunikationsverbindungen über unterschiedliche Arten von Kommunikationsverbindungen aufzubauen, beispielsweise neben einer Telefonverbindung auch per Email. Häufig werden unterschiedliche Kommunikationsverbindungen zu denselben Kommunikationszielen auch über unterschiedliche Arten von Kommunikationsverbindungen durchgeführt und zwar in engem zeitlichem Zusammenhang. So kommt es in Telefongesprächen häufig zu dem Satz: "Ich sende Dir das gleich noch einmal per Email".

Um eine angekündigte Nachricht auch zu versenden, bieten Kontextmenüs einiger Telefonanwendungen bereits an, an das in der Anrufliste aufgeführte Kommunikationsziel eine SMS zu senden. Die ermöglicht aber nur den Aufbau einer Kommunikationsverbindung anhand identischer Kommunikationszieldaten, wie im vorliegenden Fall der exakten Telefonnummer; um zu einem späteren Zeitpunkt aber eine SMS unter Ausnutzung der Anrufliste zu versenden, müsste zunächst die Telefonanwendung gestartet werden, dann die Anrufliste aufgerufen und anschließend der entsprechende Anruflisteneintrag ausgewählt werden. Um eine Email oder eine sonstige Kommunikationsverbindung mit abweichenden Kommunikationszieldaten aufzubauen, nämlich mit der Email-Adresse anstatt der Telefonnummer, wäre hingegen zunächst die Email-Anwendung zu öffnen und dann aus dem Adressbuch die Email-Adresse des gewünschten Kommunikationszieles herauszusuchen. Ein Zugriff direkt aus der Email-Anwendung auf entsprechende Kommunikationszieldaten des letzten oder der letzten Telefongesprächspartner ist nicht möglich. Ebenso ist ein Zugriff direkt aus der SMS-Anwendung auf die Anrufliste der TelefonAnwendung nicht möglich.

Es ist daher Aufgabe der vorliegenden Erfindung, ein verbessertes Verfahren zum Betreiben eines elektronischen Endgeräts bereitzustellen. Die der Erfindung zugrundeliegende Aufgabe wird gelöst durch ein Verfahren zum Betreiben eines elektronischen Endgeräts, insbesondere eines mobilen elektronischen Endgerätes (z.B. eines Mobiltelefons) oder eines PCs, umfassend die folgenden Verfahrensschritte: Bereitstellen von zumindest zwei unterschiedlichen Kommunikationsanwendungen, insbesondere einer Email-Anwendung, einer SMS-Anwendung oder einer Telefonanwendung, wobei die Kommunikationsanwendung anhand von Kommunikationszieldaten, insbesondere einer Telefonnummer, einer Email Adresse oder eines Namens einer Kontaktperson, eine Kommunikationsverbindung mit einem Kommunikationsziel, insbesondere einem Gesprächspartner oder einem dem Gesprächspartner zugeordneten Endgerät, aufbauen kann. Zum Aufbau der Kommunikationsverbindung erfordert die erste Kommunikationsanwendung insbesondere eine andere Art von Kommunikationszieldaten als die erste Kommunikationsanwendung. So unterscheiden sich z.B. eine Telefonnummer und eine Email-Adresse dem Grunde nach in Ihrer Art als Kommunikationszieldaten.

Das erfindungsgemäße Verfahren ist dadurch gekennzeichnet, dass eine Referenz auf ein Kommunikationsziel in einer Kontakteliste durch die erste Kommunikationsanwendung abgelegt wird, falls eine Kommunikationsverbindung durch die erste Kommunikationsanwendung mit diesem Kommunikationsziel aufgebaut wird oder ein Kommunikationsversuch mit diesem Kommunikationsziel durch die erste Kommunikationsanwendung erfolgt. Es erfolgt ein Abfragen der Kontakteliste durch die zweite Kommunikationsanwendung, wenn ein Kommunikationsaufbau mit dieser zweiten Kommunikatiansanwendung eingeleitet wird. Anschließend kann der Nutzer eines der in der Kontakteliste aufgeführten Kommunikationsziele auswählen. Es erfolgt das Bereitstellen von Kommunikationszieldaten des zuletzt verwendeten oder mehrerer der zuletzt verwendeten Kommunikationsziele, welche der zweiten Kommunikationsanwendung entsprechen, für eine Auswahl durch den Nutzer zum Zwecke des Aufbaus einer Kommunikationsverbindung durch die zweite Kommunikationsanwendung. Anschließend kann der Nutzer eines der in der Kontakteliste aufgeführten Kommunikationsziele auswählen. Dabei müssen die konkreten Kommunikationszieldaten nicht explizit angezeigt werden; es reicht aus, wenn beispielsweise nur den Namen des Kommunikationsziels anzeigt wird, womit dem Nutzer signalisiert werden kann, dass sich dahinter auch die entsprechenden Kommunikationszieldaten verbergen.

Unter unterschiedlichen Kommunikationsanwendungen ist insbesondere gemeint, dass die Kommunikationsanwendungen Nachrichten in unterschiedlichen Formaten versenden bzw. austauschen und/oder Kommunikationszieldaten unterschiedlichen Formates für den Aufbau der Kommunikationsverbindung benötigen. Mit Kommunikationszieldaten sind insbesondere eindeutige Adress- oder Identifikationsangaben gemeint, die ausschließlich einem Kommunikationsziel zugeordnet werden können. Als übliche Kommunikationszieldaten können eine Telefonnummer oder eine Email-Adresse genannt werden. Es existiert dann als Kontakteliste eine Art anwendungsübergreifende Anrufliste, worin nicht nur die zuletzt durchgeführten Telefonate berücksichtigt sind, sondern auch andersartige Kommunikationsverbindungen oder zumindest versuchte Kommunikationsverbindungen, beispielsweise per Telefon, Email oder SMS. So umfasst die Kontakteliste, also nicht nur Einträge über die zuletzt eingegangenen und ausgegangenen Telefonate, sondern auch beispielsweise auch über die zuletzt eingegangenen bzw. abgesendeten Emails oder SMS-Nachrichten. Leitet nun der Nutzer eine Kommunikationsverbindung ein, beispielsweise will er eine Email versenden, so kann er aus der jeweiligen Kommunikationsanwendung, z.B. der Email-Anwendung, heraus die Kontakteliste öffnen. Es werden dem Nutzer nun eine oder mehrere der zuletzt verwendeten Kommunikationsziele angezeigt, unanhängig nach der Art der entsprechenden Kommunikationsverbindung oder Art der Kommunikationszieldaten, also unabhängig davon, ob die Kommunikation oder die versuchte Kommunikation per Email, Telefon oder SMS stattfand. Sollte also beispielsweise der Nutzer A zuletzt ein Telefonat mit einem anderen Nutzer B geführt haben, so würde beispielsweise dieser Nutzer B an der ersten Stelle einer Liste stehen, wenn der Nutzer eine Vorauswahl für mögliche Emailadressen aus der Email-Anwendung heraus aufruft.

Es hat sich gezeigt, dass häufig genutzte Kontakte (Kommunikationsziele) nicht nur auf einem Kommunikationsweg kontaktiert werden, sondern die häufig genutzten Kontakte auf unterschiedlichen Kommunikationswegen kontaktiert werden. Mit anderen Worten: einer Person, mit der ich häufig telefoniere, schreibe ich auch häufig Emails und umgekehrt. Mit der Einführung einer sogenannten anwendungsübergreifenden Anrufliste, kann also schnell auf die letzten Kommunikatiansziele unabhängig der Art der Kommunikationsverbindung, zurückgegriffen werden und diese letzten Kommunikationsziele für eine neue Kontaktaufnahme ausgewählt werden, unabhängig von der Art der Kommunikationsverbindung oder Art der Kommunikationszieldaten.

In einer ersten vorteilhaften Ausgestaltung wird die Kontakteliste vorzugsweise in einer anwendungsunabhängigen Speicherfunktion abgelegt. Auf diese Kontakteliste kann sowohl die erste Kommunikationsanwendung als auch die zweite Kommunikationsanwendung zugreifen, nämlich die Kontakteliste abfragen und bearbeiten. Es entsteht eine offene Kontakteliste, auf die bei Bedarf jede Kommunikationsanwendung unabhängig von einer anderen Kommunikationsanwendung zugreifen kann, als insbesondere ohne dass ein "Umweg" auf eine spezielle Kommunikationsanwendung, die alleine zugangsberechtigt ist, notwendig ist. Der Aufbau einer Kommunikationsverbindung kann für den Nutzer deutlich vereinfacht werden.

In einer zweiten vorteilhaften Ausgestaltung kann jede Kommunikationsanwendung weiterhin wie bekannt ihre eigene Kontakteliste führen. Damit aber dennoch die anwendungsübergreifende Nutzbarkeit von Kantaktelisten vedübgar ist, wird eine Art Push-Mechanismus vorgesehen, durch den die einzeinen Kommunikationsanwendungen jeweils selbständig und aktiv die Kontaktelisten auch der jeweils anderen Kommunikationsanwendungen mit eigenen Einträgen aktualisiert. Hierfür sind geeignete Schnittstellen zwischen den Kommunikationsanwendungen vorzusehen, damit die eine Kommunikationsanwendung auf die Kontakteliste der jeweils anderen Kommunikationsanwendung zugreifen kann.

In einer dritten vorteilhaften Ausgestaltung ist wiederum nur jeweils eine Kontakteliste vorgesehen, auf die mehrere Kommunikationsanwendungen zugreifen können. Dabei stellt die eine Kommunikationsanwendung eine Art Master-Anwendung dar, die sozusagen eine gemeinsame Kontakteliste verwaltet. Die jeweils andere Kommunikationsanwendung kann analog zur zweiten Ausgestaltung durch eine Art Push-Mechanismus die Referenz auf diese eine Kontakteliste ablegen. Der Unterschied zur zweiten Ausgestaltung liegt also darin, dass die andere Kommunikationsanwendung keine eigene Kontakteliste verwaltet.

In der Kontakteliste sind dabei lediglich Referenzen, also Zeiger, auf das eigentliche Kommunikationsziel abgelegt, vorzugsweise kombiniert mit einer Zeitangabe der letzten Kommunikationsverbindung bzw. des letzten Versuchs einer Kommunikationsverbindung. Es können aber auch weitere Angaben in der Kontakteliste bezüglich der Referenzen hinterlegt sein, insbesondere der Art der letzten Kommunikationsverbindung, beispielsweise ob es sich um eine eingehende oder eine abgesendete SMS oder Email handelt.

Die Erfindung wird anhand der Figur nachfolgend erläutert: hierin zeigt
- Figur 1: schematisch ein Kommunikationsziel in Form eines Nutzers oder eines dem Nutzer zugeordneten Mobiltelefons mit zugeordneten Kommunikationszieldaten;
- Figur 2: die Visualisierung einer Kontakteliste auf dem Monitor des Mobiltelefons.

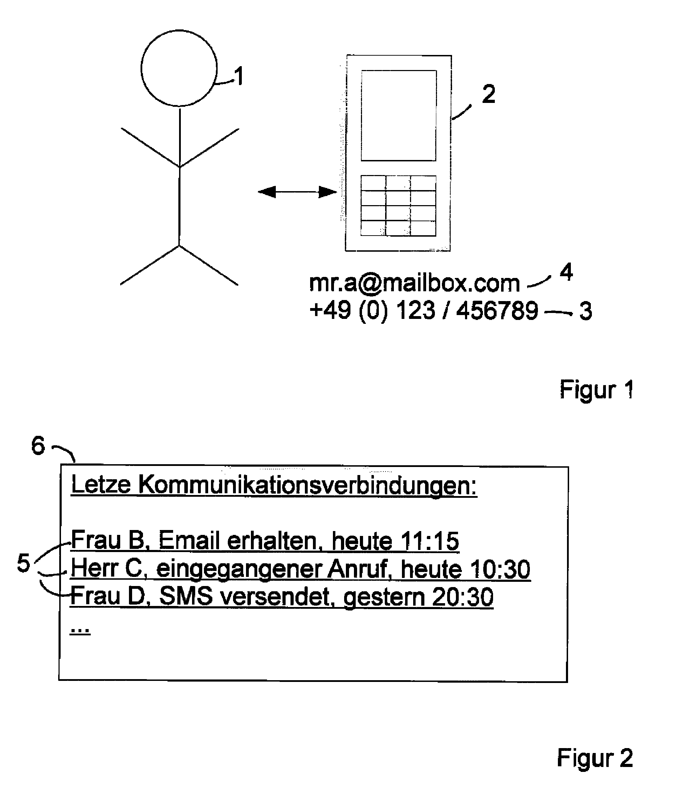

In Figur 1 ist ein Engerätenutzer 1 dargestellt. Der Nutzer 1 verfügt über Zugang zu einem Mobiltelefon 2. Insofern ist das Mobiltelefon 2 dem Nutzer 1 zugeordnet. Sowohl der Nutzer 1 als auch das Mobiltelefon 2 wird im Rahmen der Erfindung als Kommunikationsziel angesehen. Um mit dem Nutzer 1 in Kontakt zu treten, kann beispielsweise die Telefonnummer 3 oder die Emailadresse 4 des Nutzers 1 verwendet werden. Tatsächlich wird mit der Telefonnummer 1 oder der Emailadresse 2 nicht der Nutzer selbst erreicht, sondern vielmehr das zugeordnete Mobiltelefon 2, auf dem eine Telefon- oder Email-Anwendung ausgeführt wird.

Figur 2 zeigt die Visualisierung einer Kontakteliste, die auf einem Speicher innerhalb des Mobiltelefons 2 abgelegt ist. Dort sind mehrere der zuletzt aufgebauten Kommunikationsverbindungen genannt, und zwar in zeitlich absteigender Reihenfolge. So hat der Nutzer 1 zuletzt von Frau B. eine Email erhalten, nämlich heute um 11:15 Uhr. Davor ging ein Telefonat von Herrn C. ein, nämlich heute um 10:30 Uhr. Gestern um 20:30 Uhr hat der Nutzer 1 eine SMS an Frau D. versendet. Es ist ersichtlich, dass die letzten Kommunikationsverbindungen, die in der Kontakteliste gezeigt sind, unterschiedlicher Natur sind, nämlich einmal ein Telefonat, einmal eine Email und einmal eine SMS. Dennoch erscheinen diese Kommunikationsverbindungen in dieser einzigen Kontakteliste.

Der Nutzer 1 möchte nun beispielsweise einen Anruf tätigen und startet die Telefonanwendung auf seinem Mobilfunktelefon. Zur Auswahl des anzurufenden Gesprächspartners (Kommunikationsziel) muss er sich nicht aufwändig durch sein Adressbuch klicken. So betätigt er die Auswahl "letzte Kontakte". Es erscheint die Kontakteliste 6, die neben dem zuletzt vorgenommenen Telefonanruf mit Herrn C. auch die Emailverbindung mit Frau B. und die SMS-Verbindung mit Frau D. aufführt.

Zuletzt hat der Nutzer von Frau B. eine Email erhalten und möchte sich mit Frau B über diese Email noch telefonisch unterhalten. Er kann dann den Eintrag "Frau B" auswählen, wodurch dann eine Telefonverbindung mit Frau B. aufgebaut wird. Dies gilt natürlich auch analog dafür, dass der Nutzer eine SMS oder eine Email an einen der in der Kontakteliste gezeigten Kommunikationsziele versenden möchte.

Die Kontakteliste kann eine beliebige Länge aufweisen. So ist insbesondere vorgesehen, dass der Nutzer selbst festlegen kann, wie viele Einträge eine Kontakteliste umfassen soll oder zumindest angezeigt werden sollen. Die Anzahl kann von eins bis nahezu unendlich variieren.

## Patentansprüche

1. Verfahren zum Betreiben eines elektronischen Endgerätes, insbesondere eines Mobiltelefons oder eines PCs, umfassend die folgenden Verfahrensschritte:
Bereitstellen von zumindest zwei unterschiedlichen Kommunikationsanwendungen, insbesondere einer Emailanwendung, einer SMS-Anwendung oder einer Telefonanwendung,
wobei die Kommunikationsanwendungen anhand von Kommunikationszieldaten, insbesondere einer Telefonnummer (3) oder einer Emailadresse (4), eine elektronische Kommunikationsverbindung mit einem Kommunikationsziel (1, 2), insbesondere einem Gesprächsteilnehmer (1) oder einem dem Gesprächsteilnehmer zugeordneten Endgerät (2), aufbauen können,
**gekennzeichnet durch** folgende Verfahrensschritte:
Ablegen einer Referenz (5) auf ein Kommunikationsziel (1, 2) in einer Kontakteliste (6) **durch** die erste Kommunikationsanwendung, falls eine Kommunikationsverbindung **durch** die erste Kommunikationsanwendung mit diesem Kommunikationsziel (1, 2) aufgebaut wird oder ein Kommunikationsversuch mit diesem Kommunikationsziel (1, 2) **durch** die erste Kommunikationsanwendung erfolgt,
Abfragen der Kontakteliste (6) **durch** die zweite Kommunikationsanwendung, wenn ein Kommunikationsaufbau mit dieser zweiten Kommunikationsanwendung eingeleitet wird,
Bereitstellen von Kommunikationszieldaten (3, 4) des zuletzt verwendeten oder mehrerer der zuletzt verwendeten Kommunikationsziele (1, 2), welche der zweiten Kommunikationsanwendung entsprechen, für eine Auswahl **durch** den Nutzer (1) zum Zwecke des Aufbaus einer Kommunikationsverbindung **durch** die zweite Kommunikationsanwendung.

2. Verfahren nach dem vorherigen Anspruch, **dadurch gekennzeichnet, dass** die Kontakteliste (5) in einer anwendungsunabhängigen Speicherfunktion abgelegt wird und, wobei die Kontakteliste (6) sowohl durch die erste Kommunikationsanwendung als auch durch die zweite Kommunikationsanwendung abgefragt und bearbeitet werden kann.

3. Verfahren nach Anspruch 1, **dadurch gekennzeichnet, dass** die erste Kommunikationsanwendung eine erste Kontaktliste (6) führt und dass die zweite Kommunikationsanwendungen eine zweite Kontakteliste (6) führt, die insbesondere jeweils in einer anwendungsabhängigen Speicherfunktion abgelegt sind, wobei die erste Kommunikationsanwendung die Referenz (5) auf ein Kommunikationsziel (1, 2) sowohl in der ersten Kontakteliste als auch in der zweiten Kontakteliste ablegt, falls eine Kommunikationsverbindung mit diesem Kommunikationsziel (1, 2) durch die erste Kommunikationsanwendung aufgebaut wird oder ein Kommunikationsversuch mit diesem Kommunikationsziel (1, 2) durch die erste Kommunikationsanwendung erfolgt.

4. Verfahren nach Anspruch 1, **dadurch gekennzeichnet, dass** lediglich eine der Kommunikationsanwendungen eine Kontaktliste (6) führt und dass die sowohl die erste Kommunikationsanwendung als auch die zweite Kommunikationsanwendung die Referenz (5) auf ein Kommunikationsziel (1, 2) in dieser Kontakteliste ablegt, falls eine Kommunikationsverbindung mit diesem Kommunikationsziel (1, 2) durch die jeweilige Kommunikationsanwendung aufgebaut wird oder ein Kommunikationsversuch mit diesem Kommunikationsziel (1, 2) durch die jeweilige Kommunikationsanwendung erfolgt.

5. Verfahren nach einem der vorherigen Ansprüche, **dadurch gekennzeichnet, dass** die erste und die zweite Kommunikationsanwendung für den Aufbau einer Kommunikationsverbindung unterschiedliche Arten von Kommunikationszieldaten erfordern.
